# EUROPÄISCHE PATENTSCHRIFT

(11) **EP 1 073 809 B1**
(45) Veröffentlichungstag und Bekanntmachung des Hinweises auf die Patenterteilung: **21.01.2004**
(21) Anmeldenummer: 99924720.8
(22) Anmeldetag: 24.03.1999
(51) Int. Cl.: E04C 5/01, B23D 25/14

(54) **FASER ZUR VERSTÄRKUNG GIESSBARER AUSHÄRTENDER WERKSTOFFE SOWIE VERFAHREN UND VORRICHTUNG ZU DEREN HERSTELLUNG**
FIBER FOR REINFORCING CASTABLE HARDENING MATERIAL AND CORRESPONDING PRODUCTION METHOD AND DEVICE
FIBRE POUR LE RENFORT DE MATERIAUX COULABLES APTES AU DURCISSEMENT, AINSI QUE PROCEDE ET DISPOSITIF POUR SA FABRICATION

(30) Priorität: 24.04.1998 DE 19819148
(43) Veröffentlichungstag der Anmeldung: 07.02.2001
(73) Patentinhaber: Kämereit, Wilhelm, Dipl.-Ing., 40229 Düsseldorf (DE)
(72) Erfinder: Kämereit, Wilhelm, Dipl.-Ing., 40229 Düsseldorf (DE)
(74) Vertreter: Meissner, Peter E., Dipl.-Ing.
(86) Internationale Anmeldenummer: PCT/DE1999/000951
(87) Internationale Veröffentlichungsnummer: WO 1999/055980

(56) Entgegenhaltungen:
- DE-A- 2 359 367
- DE-A- 4 314 008
- DE-U- 9 000 846
- B. MARCHESE, P. VALLARIO, G. MARCHESE: "Compositi cementizi rinforzati con fibre di acciaio " L'INDUSTRIA ITALIANA DEL CEMENTO, 7. August 1995 (1995-08-07), Seiten 444-455, XP002111318

## Beschreibung

Die Erfindung betrifft eine Faser, insbesondere Stahlfaser, zur Verstärkung gießbarer aushärtender Werkstoffe gemäß dem Gattungsbegriff des Patentanspruchs 1. Ferner betrifft die Erfindung ein Verfahren zur Herstellung derartiger Fasern sowie eine Vorrichtung zur Durchführung dieses Verfahrens.

Eine derartige Faser ist aus der DE-OS 23 59 367 bekannt.

Zur Erhöhung der Festigkeitseigenschaften gießbarer aushärtender Werkstoffe wie etwa Beton oder Kunstharze werden vielfach Armierungen aus anderen Werkstoffen in den aushärtenden Werkstoff eingebracht. Im Regelfall soll insbesondere die Zugfestigkeit des auf diese Weise gebildeten Verbundwerkstoffs erhöht werden. Ziel ist es, aus dem quasi spröden Werkstoff Beton einen quasi elastischen Verbundwerkstoff zu bilden. Allgemein üblich bei der Verarbeitung von Beton ist die Einbringung von draht- oder stabförmigem Moniereisen. Für bestimmte Anwendungsfälle (z. B. Herstellung von Böden von Produktionshallen oder Wandauskleidungen von Tunnelbauten mit Spritzbeton) wird der Armierungswerkstoff auch in Form relativ kleinteiliger Fasern zugegeben. Diese Fasern haben beispielsweise eine Länge im Bereich von 20 bis 60 mm und eine Dicke in einer Größenordnung von 0,5 bis 2 mm. Als Werkstoffe für die Fasern werden üblicherweise metallische Werkstoffe, insbesondere Stahl, eingesetzt. Es ist aber auch bekannt, beispielsweise Kunststoffasern zu verwenden. Wesentlich für die Qualität des gebildeten Verbundwerkstoffs ist eine wirksame Verankerung des Fasermaterials in der Matrix des Grundwerkstoffs. Da die Zugfestigkeit des Verbundwerkstoffs über die Zugfähigkeit des Grundwerkstoffs hinaus erhöht werden soll und nach einem eventuellen Riß im Matrixwerkstoff vom Verbundwerkstoff weiterhin noch Zugbelastungen aufgenommen werden müssen, ist es wesentlich, daß der Widerstand gegen ein Herausziehen der Fasern aus dem Matrixwerkstoff ausreichend hoch liegt. Hierzu ist es bekannt, beispielsweise Stahlfasern mit einer von der glattzylindrischen oder prismatischen Form abweichenden Gestalt zu erzeugen, indem die Faserenden zum Beispiel angestaucht oder abgeknickt werden. So weist beispielsweise eine aus der Praxis bekannte Stahlfaser, die aus einem Draht mit rundem Querschnitt hergestellt ist, eine im wesentlichen über ihre axiale Länge geradlinige Form auf, wobei der Draht an den Enden der Stahlfasern gekröpft ist, d. h. jeweils bogenförmig von der Mittelachse der Stahlfaser weggeschwenkt ist und parallel im Abstand zur Mittelachse ausläuft.

Wenngleich eine gute Verankerung der Fasern im Grundwerkstoff wichtig ist, so darf diese Verankerung jedoch auch nicht zu stark sein, damit das Ziel, einen quasi elastischen, also dehnungsfähigen Verbundwerkstoff zu erhalten, nicht verfehlt wird. Ist nämlich die Verankerung der Fasern zu intensiv, so kann die Elastizität des Faserwerkstoffs im Falle einer Rißbildung im Matrixwerkstoff nicht hinreichend genutzt werden. Es kommt dann nämlich nur im unmittelbaren Nahbereich des Risses zu einer Dehnung des Faserwerkstoffs. Das heißt, daß die Elastizität des größtenteils der Faserlänge gar nicht zur Wirkung kommen kann. Somit tritt bei entsprechenden Belastungen ohne große Dehnung ein plötzlicher Bruch ein.

Aus dem Deutschen Gebrauchsmuster DE-G 90 00 846.4 ist eine Vielzahl von Formen für Fasern zur Herstellung von Faserbeton bekannt. Zur Verbesserung ihrer Verankerungseigenschaften im Matrixwerkstoff sind diese im wesentlichen geradlinig entlang einer Mittelachse geformten Stahlfasern an ihren Enden mit besonderen Formelementen versehen. Diese Formelemente könne beispielsweise in Abknickungen oder auch in kopfförmigen Verdickungen bestehen. Über die Herstellung dieser Fasern werden keine detaillierten Angaben gemacht. In Zusammenhang mit der Beschreibung der verschiedenen Faserformen ist jedoch von der Verwendung von rundem oder eckigem faden- oder streifenförmigen Material sowie vom Plattdrücken oder Abknicken der Enden die Rede. Dies läßt den Schluß zu, daß die Formelemente zur Verbesserung der Verankerungseigenschaften durch Umformen auf spanlosem Wege, also durch Biegen oder Drücken erzeugt werden.

Aufgabe der vorliegenden Erfindung ist es eine gattungsgemäße Faser dahingehend zu verbessern, daß bei weiterhin guter Verankerung im Matrixwerkstoff eine deutliche Verbesserung der Dehnungseigenschaften des Verbundwerkstoffes erzielt wird, die sich in einem erhöhten Arbeitsvermögen im Faserausziehversuch zeigt. Ferner soll ein Verfahren und eine Vorrichtung zu dessen Durchführung angegeben werden, mit dem die erfindungsgemäßen Stahlfasern auf möglichst einfache und wirtschaftlicherweise herstellbar sind.

Gelöst wird diese Aufgabe mit den in den unabhängigen Ansprüchen angegebenen Merkmalen. Vorteilhafte Weiterbildungen der Erfindung sind in den jeweiligen Unteransprüchen eingegeben.

Die Erfindung geht aus von einer Faser zur Verstärkung gießbarer aushärtender Werkstoffe (zum Beispiel Beton), die vorzugsweise aus einem metallischen Werkstoff, insbesondere Stahl, gebildet ist und eine Länge L und eine Dicke D aufweist. Die Faser erstreckt sich entlang der Fasermittellinie in einem geradlinig verlaufenden Mittelteil, der die Breite B_{M} aufweist, so daß sich beispielsweise ein rechteckiger Querschnitt im Mittelteil mit der Querschnittsfläche F_{M} = D *** B_{M} ergibt. Diese Querschnittsfläche soll im Mittelteil praktisch konstant sein. In Übereinstimmung mit einigen Formen von Fasern, die aus der DE-G 90 00 846.4 bekannt sind, weisen auch die beiden Endbereiche E der erfindungsgemäßen Faser - zumindest in Teillängen - quer zur Fasermittellinie eine größere Querschnittsfläche F_{E} auf als die Querschnittsfläche F_{M} im Mittelteil der Faser. Die bekannten Fasern weisen etwa ein schaufelförmig plattgedrücktes Ende oder aber einen im Vergleich zum Querschnitt des geraden Mittelteils um ein Mehrfaches dickeren Kopf auf. Charakteristisch für die bekannten Faserformen ist es, daß der Übergang von der konstanten Querschnittsform des geraden Mittelteils sehr plötzlich, also quasi sprunghaft erfolgt. Dies führt zu einer außerordentlich intensiven Verankerung im Matrixwerkstoff Demgegenüber sieht die erfindungsgemäße Form der Faser vor, daß die Endbereiche E, deren Länge mindestens jeweils etwa 5 % der gesamten Faserlänge L betragen soll, zwar auch eine Vergrößerung der Querschnittsfläche F_{E} in Richtung auf das jeweilige Faserende aufweisen sollen. daß diese Vergrößerung der Querschnittsfläche F_{E} aber quasi kontinuierlich aus dem konstanten Mittelteil hervorgeht. also nicht sprunghaft ausgebildet ist, wie dies bei der kopfförmigen Verdickung im Stand der Technik der Fall ist. Dort wächst im Bereich des Kopfansatzes über einen sehr kleinen Teil der axialen Länge der Faser die Querschnittsfläche auf ein Mehrfaches der konstanten Querschnittsfläche des Mittelteils an. Die erfindungsgemäß vorgesehene nicht sprunghafte, sondern eher gleitende Vergrößerung der Querschnittsfläche führt zu einer überraschend hohen Zunahme des Arbeitsvermögens im Faserausziehversuch.

Die Länge der Endbereiche E mit der Querschnittsvergrößerung sollte zweckmäßig jeweils mindestens 7 %, insbesondere mindestens 10 %, der Faserlänge L ausmachen und zweckmäßigerweise auf höchstens 25 %. insbesondere höchstens 20 %, der Faserlänge L beschränkt werden. Weiterhin empfiehlt es sich, die Querschnittszunahme auf deutlich geringere Werte zu beschränken, als dies bei der bekannten Faser der Fall ist. Als vorteilhaft wird eine maximale Querschnittsfläche F_{E} in den Endbereichen E angesehen, die im Bereich des 1,1- bis 2-Fachen, insbesondere des 1,3- bis 1,7-Fachen, der Querschnittsfläche F_{M} im Fasermittelteil erachtet. Vorteilhaft ist eine Beschränkung auf höchstens das 1,5-Fache der Querschnittsfläche F_{M}. Die Querschnittsvergrößerungen sind regelmäßig an beiden Enden einer Faser angeordnet. Zweckmäßigerweise sind die Längskanten der Fasern jeweils als zueinander kongruente Schnittkanten ausgebildet und die Endbereiche E punktsymmetrisch zueinander geformt. In einer besonders vorteilhaften Ausführungsform weisen die Endbereiche E zumindest in einer ersten Teillänge jeweils eine Abwinklung von dem geraden Mittelteil der Faser auf, wobei die Längskanten der Abwinklung zueinander parallel verlaufen und wobei die Abwinklungen einer Faser jeweils bezüglich der Mittellinie des geraden Mittelteils zu entgegengesetzten Seiten hinweisen. Die Abwinklung der Endbereiche muß nicht unbedingt völlig geradlinig verlaufen, sondern kann nochmals eine weitere Abwinklung beinhalten, die zu einer Teillänge am äußersten Ende der Faser führt, die parallel zum geraden Mittelteil verläuft und die gleiche Breite B_{M} aufweist wie dieser Mittelteil. Die Übergangsstellen zwischen dem Mittelteil und den Endbereichen könne eckig ausgeführt sein. Es empfiehlt sich allerdings, an diesen Ecken jeweils einen Rundungsradius r vorzusehen. Der Winkel γ der Abwinklung liegt bezogen auf die Mittellinie des Mittelteils zweckmäßigerweise im Bereich von 20° bis 60°.

Zur Herstellung von Fasern mit abgewinkelten Endbereichen wird ein Verfahren vorgeschlagen, von dem wesentliche Grundzüge aus der DE 43 14 008 A1 bekannt sind. Die Herstellung erfolgt nämlich in besonders einfacher und wirtschaftlicher Weise durch Zerschneiden eines blechförmigen, insbesondere streifenförmigen, Vormaterials, das in einer schrittweisen Vorschubbewegung in den Schneidbereich eines Schneidwerkzeugs bewegt wird, wobei die Richtung der Vorschubbewegung in einem Winkel α von weniger als 90° zur Faserlängsachse gehalten wird und wobei die Größe des Vorschubs V die Breite B_{M} der Faser nach der Beziehung B_{M} = V * sinα bestimmt. Auf den Offenbarungsgehalt dieser Schrift wird hiermit ausdrücklich verwiesen und vollinhaltlich Bezug genommen. Anstelle eines Schneidwerkzeugs mit geraden Schneidkanten wird in dem erfindungsgemäßen Verfahren ein Schneidwerkzeug eingesetzt, dessen Schneidkanten entsprechend der gewünschten Faserform lediglich einen geraden Mittelteil und daran anschließende abgewinkelte Enden aufweisen, wobei die abgewinkelten Enden jeweils in einem Winkel β zur Vorschubrichtung stehen, der größer ist als der Winkel α.

Die erfindungsgemäße Vorrichtung zur Durchführung dieses Verfahrens basiert auf einer Vorrichtung, die ebenfalls aus der DE 43 14 008 A1 bekannt ist. Diese Vorrichtung weist mindestens eine stationäre Schneide und mindestens eine damit korrespondierende , motorisch angetrieben bewegte Schneide sowie eine schrittweise arbeitende Vorschubeinrichtung für die Zuführung eines blechförmigen Vormaterials in den Schneidbereich der Schneiden auf. Die Vorschubrichtung steht dabei in einem Winkel α von weniger als 90° zur Längsachse der stationären Schneide, die einen parallel zu dieser Längsachse verlaufenden geraden Mittelteil aufweist. In Weiterentwicklung dieser Vorrichtung ist zur Herstellung der erfindungsgemäßen Fasern vorgesehen, daß die Schneiden jeweils abgewinkelte Enden aufweisen, die in einem Winkel β zur Vorschubrichtung stehen, der größer ist als der Winkel α. Das letzte Teilstück der Enden an den Schneiden kann dabei im Bedarfsfall eine zweite Abwinklung aufweisen, so daß das Ende jeweils parallel zur Längsachse der Schneide ausläuft. Als zweckmäßig hat sich eine Festlegung des Winkels α im Bereich von 20° bis 60° und des Winkels β im Bereich von 30° bis 90° erwiesen. Um die Ecken im Übergangsbereich der Abwinklungen mit Rundungen zu versehen, können die entsprechenden Ecken der Abwinklungen an den Schneiden mit Rundungsradien r ausgebildet sein. Zur Leistungssteigerung einer entsprechenden Vorrichtung empfiehlt es sich, eine Vielzahl von stationären und damit zusammenwirkenden bewegten Schneiden nebeneinander anzuordnen. Vorteilhaft im Hinblick auf die Fertigungskosten ist die Verwendung einer rotierenden Messerwalze für die bewegten Schneiden, wie dies aus der DE 43 14 008 A1 bekannt ist.

Im Folgenden wird die Erfindung anhand der Zeichnung mit den darin wiedergegebenen Ausführungsbeispielen näher erläutert. Es zeigen:
- Fig. 1: eine schematische Draufsicht auf eine aus einem Blechstreifen ausgeschnittene Stahlfaser,
- Fig. 2, 3: vergrößerte Ansichten des Übergangsbereichs zwischen Mittelteil und Endbereich einer Faser,
- Fig. 4: Beispiele von Faserformen und
- Fig. 5 bis 8: Kraft-Weg-Verläufe im Faserausziehversuch für unterschiedliche Fasern.

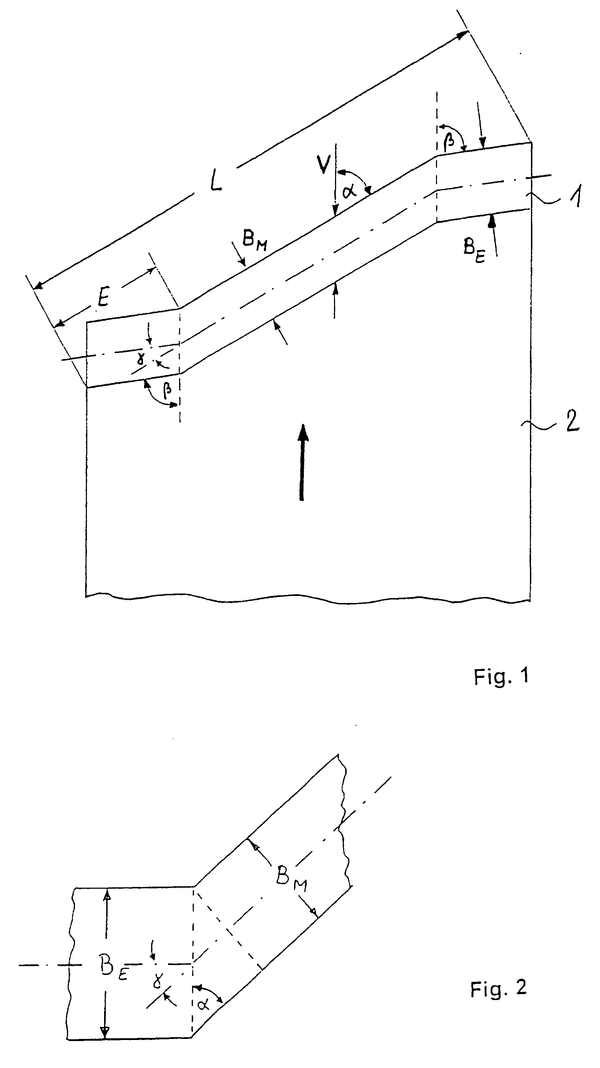

Die schematische Darstellung in Fig. 1 läßt erkennen, wie eine erfindungsgemäße Stahlfaser 1 aus einem Blechstreifen 2 ausgeschnitten werden kann. Diese bevorzugte Herstellung von Fasern aus einem blechförmigen Vormaterial führt regelmäßig zu Fasern mit einer über die gesamte Länge L der Faser gleichbleibenden Dicke D, die der Blechdicke entspricht. Die Mittellinie der Faser 1 ist strichpunktiert eingezeichnet. Die Vorschubrichtung des Bleches 2 ist durch einen dick eingezeichneten Pfeil angegeben. Die Größe des Vorschubs ist mit V bezeichnet. Die Faser 1 weist einen geradlinig verlaufenden Mittelteil auf, der zwischen den gestrichelt angedeutenden Linien liegt. Die Endbereiche E an den beiden Enden der Faser 1 sind gegenüber diesem geradlinigen Verlauf des Mittelteils um einen Winkel γ abgewinkelt. Wesentlich für die Herstellung der erfindungsgemäßen Faser ist es, daß die Mittellinie des geraden Mittelteils in einem Winkel α zur Vorschubrichtung steht, der kleiner ist als 90°. Die abgewinkelten Enden E stehen in einem Winkel β zur Vorschubrichtung, der größer ist als der Winkel α. Es gilt die Beziehung β = α + γ. Infolge der Schrägstellung des Mittelteils der Faser 1 zur Vorschubrichtung ergibt sich im Mittelteil eine Breite B_{M} quer zur Mittellinie der Faser, die sich aus der Beziehung B_{M} = V * sinα bestimmt. In entsprechender Weise läßt sich die Breite B_{E} der Faser 1 in den abgewinkelten Endbereichen bestimmen aus dem Produkt B_{E} = V * sinβ. Da α kleiner als 90° ist und β größer als α, ergibt sich für die Endbereiche E eine größere Breite als die Breite B_{M} des geraden Mittelteils. Die Größenverhältnisse der Breiten B_{M} des Mittelteils und B_{E} der Endbereiche gehen aus der vergrößerten und mit einem etwas größeren Winkel γ versehenen Teildarstellung der Fig. 2 noch deutlicher hervor. Der Übergangsbereich zwischen dem geraden Mittelteil und dem Endbereich ist jeweils durch gestrichelte Linien angedeutet. Man erkennt deutlich das in diesem Übergangsbereich die Breite von B_{M} linear auf B_{E} ansteigt.

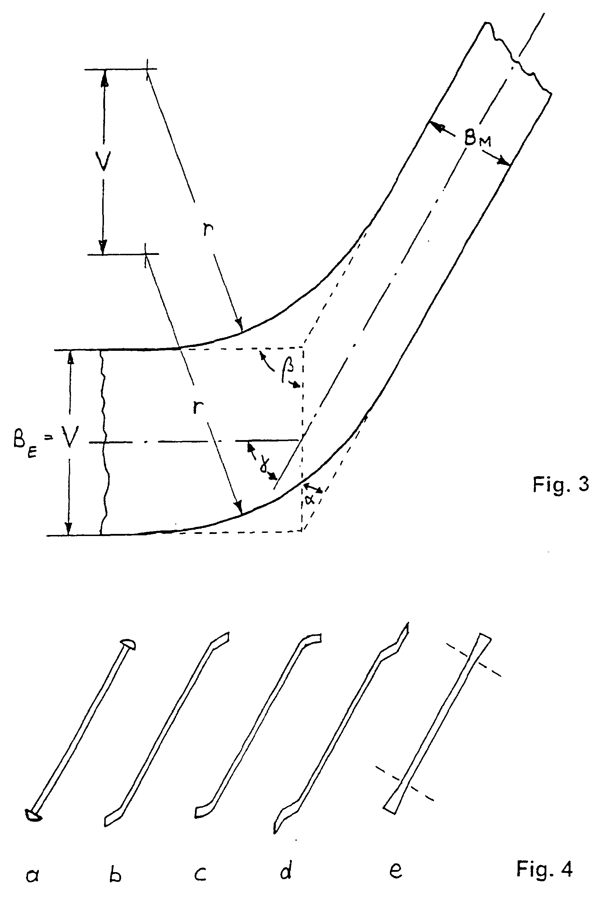

In Fig. 3 ist eine der Fig. 2 entsprechende Darstellung wiedergegeben, die sich im wesentlichen darin unterscheidet, daß die Eckbereiche mit Rundungsradien r versehen sind und daß der Winkel γ etwas größer und der Winkel γ etwas kleiner gewählt wurden. Der Winkel β beträgt genau 90°, so daß der Vorschub V gleich der Breite B_{E} ist. Durch diese Wahl der Winkel ist die Breite B_{M} im geraden Mittelteil der Faser im Verhältnis zur Breite B_{E} in den Endbereichen deutlich kleiner als bei Fig, 2 und insbesondere bei Fig. 1. Hinsichtlich des Rundungsradius r kann ein kleiner Wert gewählt werden, wenn man relativ nahe an der Ausführungsform gemäß Fig. 2 bleiben will. Mit besonderem Vorteil wird jedoch ein größerer Rundungsradius eingestellt, um einen möglichst harmonischen Übergang zwischen den geraden Mittelteil und den Endbereichen E zu erzielen. Günstige Werte liegen etwa im Bereich des 1- bis 4-Fachen, insbesondere im Bereich des 2- bis 3-Fachen der Breite B_{M} im Mittelteil der Faser.

In Fig. 4 sind vier verschiedene Faserformen einander gegenübergestellt. Die Teilfigur 4a zeigt eine herkömmliche Faser mit einem geraden Mittelteil und kopfartig verdickten Enden. Hierbei liegt praktisch ein sprunghafter Übergang vom konstanten Querschnittes des Mittelteils zu dem um ein Mehrfaches größeren Querschnitt des Kopfes vor. Die Teilfiguren 4b bis 4d zeigen dagegen erfindungsgemäße Faserformen. Die Beispiele 4b und 4c entsprechen im Prinzip der Form aus den Figuren 1, 2 bzw. 3. In Fig. 4d ist ein Beispiel dargestellt für eine Faser mit abgewinkelten Enden, in deren Endbereichen jeweils eine weitere Abwinklung angebracht ist, so daß die Enden parallel und mit gleicher Dicke wie der gerade Mittelteil auslaufen. Eine gänzlich andere (herkömmliche) Faserform geht aus Fig. 4e hervor. Diese Faserform ist in ihrer Herstellung erheblich aufwendiger ist als die Herstellung etwa der Fasern gemäß Fig. 4b oder 4c. Beim Ausschneiden aus einem Blech würden hierbei nämlich erhebliche Mengen an Schnittabfali entstehen. Demgegenüber weisen die beiden anderen erfindungsgemäßen Faserformen den Vorteil auf, daß sie durch fortlaufendes Abschneiden zum Beispiel von einem schmalen Blechstreifen ohne Entstehung von Abfall erzeugt werden können, wie dies anhand der Fig. 1 ohne weiteres erkennbar ist. In diesem Zusammenhang sei darauf hingewiesen, daß ein Plattklopfen der Enden zur Erzielung einer Form gemäß Fig. 4d keine Lösung im erfindungsgemäßen Sinn wäre, da dadurch zwar eine entsprechende Breitung des Materials erzielt würde, so daß die Grundrisse der Fasern übereinstimmen könnten, jedoch wäre damit unvermeidbar auch eine Streckung in die Länge verbunden, so daß ganz im Gegensatz zur vorliegenden Erfindung in den Endbereichen keine Querschnittsvergrößerung sondern sogar eine Querschnittsabnahme zu verzeichnen wäre.

Die vorteilhafte Wirkung der erfindungsgemäßen Faser beruht insbesondere auf dem Effekt, daß durch die Querschnittsvergrößerung in den Endbereichen einerseits einem leichten Ausziehen der Faser aus dem Matrixwerkstoff ausreichend wirksam begegnet wird, daß aber gleichzeitig durch die relativ sanfte Gestaltung des Übergangs vom konstanten Querschnitt zum größeren Querschnitt in den Endbereichen günstige Verhältnisse für die Druckverteilung im Matrixwerkstoff zur Aufnahme der Gegenkräfte zu den Zugkräften in der Faser geschaffen werden.

Bei Stahlfasern, die zum Beispiel durch Anstauchen von Drahtabschnitten mit verdickten Enden in der Art von Nagelköpfen versehen sind, stellt man infolge der äußerst starken Verankerung dieser Fasern im Matrixwerkstoff im Regelfall eine erhebliche Verzögerung des Rißbeginns im Vergleich zum Matrixwerkstoff ohne Fasern fest. Mit zunehmender Belastung erfolgt dann aber ein sehr plötzliches Reißen der Fasern. Das spröde Verhalten des Matrixwerkstoffs ist daher immer noch vorhanden und wird lediglich auf ein höheres Belastbarkeitsniveau verlagert

Andere Stahlfasern, insbesondere aus Draht hergestellt Drahtfasern. die an ihren Enden Aufbiegungen aufweisen zur Verbesserung der Haftung und die im Regelfall relativ hohe Zugfestigkeiten besitzen, zeigen bei einer Zugbelastung, die größer ist als die Verbundhaftfestigkeit im Matrixwerkstoff zunächst ein Lösen von dem Matrixwerkstoff. Bei anhaltender Zugbeiastung wird die Verankerungsvorrichtung an den Faserenden geglättet, so daß das zunächst vergleichsweise hohe Lastaufnahmevermögen auf ein erheblich niedrigeres Niveau absinkt.

Durch die äußerst einfache Einstellbarkeit der Breite der Enden im Verhältnis zur Breite des geraden Mittelteils ist es bei den erfindungsgemäßen Fasern problemlos möglich, eine auf die Festigkeit des Matrixwerkstoffs möglichst optimal abgestimmte Faserform zu erzeugen. Tendenziell können die "Intensität" der Verankerung im Matrixwerkstoff und somit die Größe des Winkels γ und der Wert der Querschnittsvergrößerung in den Endbereichen E der Faser umso niedriger sein, je höher die Schubfestigkeit des Matrixwerkstoffs ist.

Anhand von Ausziehversuchen aus einer Betonmatrix wurden die positiven Eigenschaften der erfindungsgemäßen Fasern nachgewiesen. Bei sämtlichen Versuchen wurde als Matrixwerkstoff ein Mörtel mit folgender Massenzusammensetzung verwendet:
Zement : Normsand : Wasser = 1 : 3 : 0,5

Als Zement wurde ein Portlandzement ZEM I- 32,5 R eingesetzt.

In einem Vergleichsversuch wurden zunächst Stahlfasern bekannter Art eingesetzt, die aus Drahtabschnitten hergestellt waren, deren Enden zur besseren Verankerung jeweils Abbiegungen in Form einer Kröpfung aufwiesen. Die Fasern hatten eine Länge von 60 mm, einen Durchmesser von 0,9 mm und abgekröpfte Endbereiche mit einer Länge von jeweils etwa 4 bis 5 mm. Die Zugfestigkeit des Fasermaterial lag bei etwa 1100 N/mm². Bei den Ausziehversuchen wurde jeweils eine Stahlfaser in einen zylindrischen Probekörper koaxial eingebettet, der in der Mitte quer zur Längsachse geteilt war. Die beiden Hälften des Probekörpers wurden jeweils in eine Zerreißmaschine eingespannt und die Zugkraft über den Zugweg aufgezeichnet. Die Versuche wurden jeweils bei Erreichen eines Zugweges von 10 mm abgebrochen.

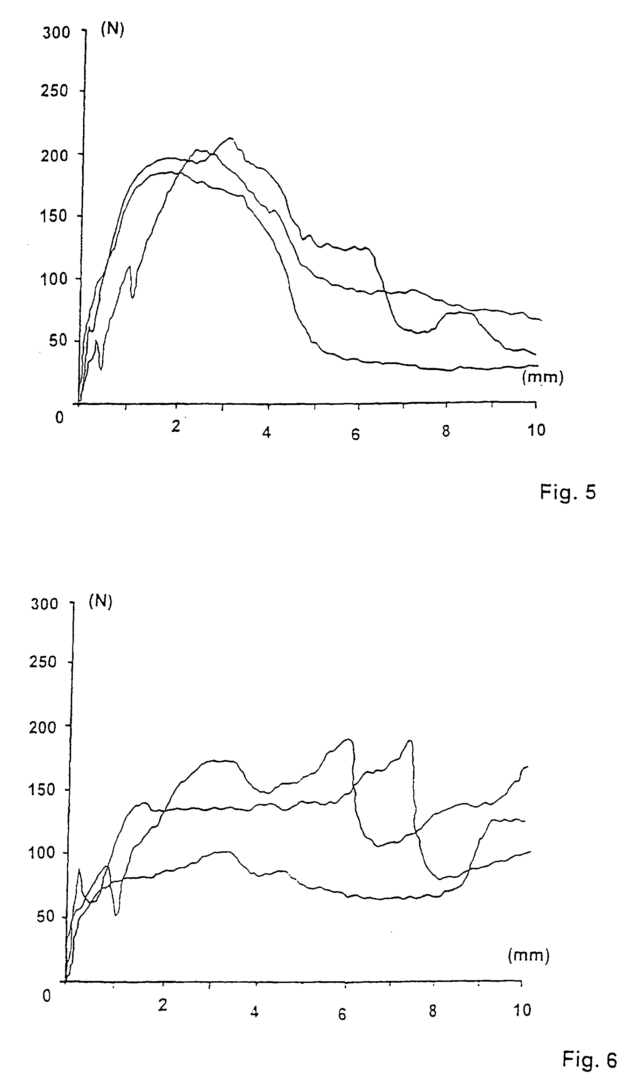

Fig. 5 zeigt für drei der bekannten Fasern den typischen Kraft-Weg-Verlauf, der sich über den ersten 2 bis 3 mm des Zugweges dadurch auszeichnet, daß die Zugkraft bis auf einen Maximalwert ansteigt. Mit zunehmendem Weg fällt die Zugkraft danach deutlich ab.

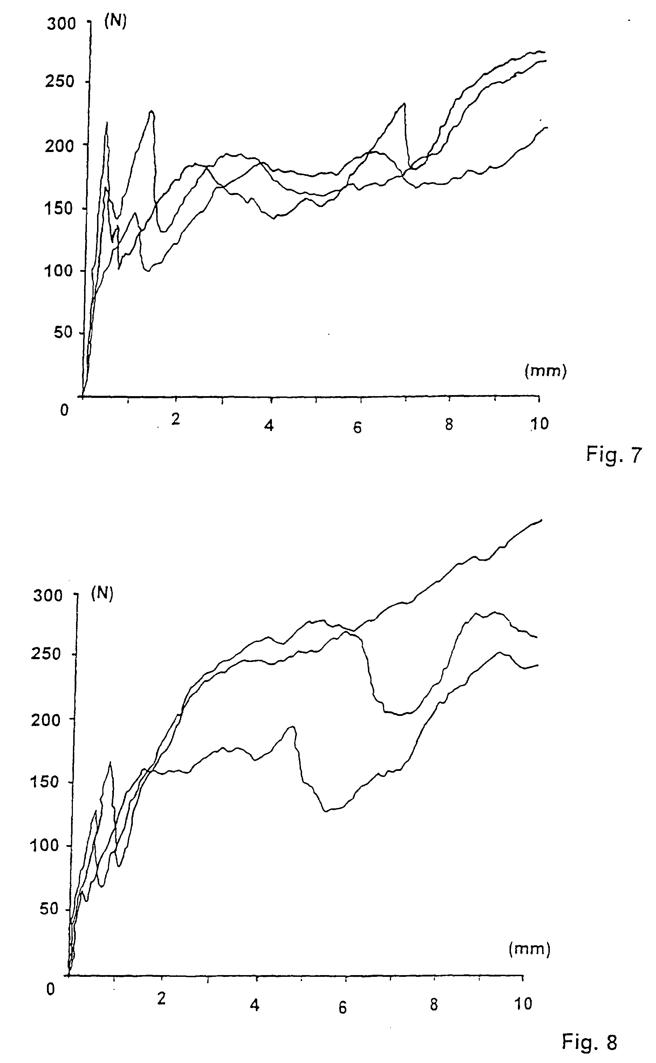

Die bei den weiteren Versuchen eingesetzten erfindungsgemäßen Fasern hatten eine Form entsprechend Fig. 4b. Sie waren aus einem Stahlblech von 0,8 mm Dicke und einer Zugfestigkeit von 950 N/mm² ausgeschnitten und hatten in ihrem geradlinigen Mittelteil eine Breite von 0,6 mm. Die Länge der Fasern betrug ebenfalls 60 mm. Es wurden insgesamt drei verschiedene Faserformen getestet, die sich voneinander lediglich durch die Stärke der Abwinklung der Endbereiche und damit in der Breite B_{E} dieser Endbereiche unterschieden. Die Versuchsergebnisse gemäß Fig. 6 beziehen sich auf eine Faser, bei der die Querschnittsfläche des Endbereichs um 20 % größer war als im geraden Mittelteil. Bei den Fasern gemäß Fig. 7 betrug diese Querschnittsvergrößerung 25 % und bei den Fasern gemäß Fig. 8 30 %. Man erkennt sehr deutlich, insbesondere in den Kurvenverläufen der Fig. 8, daß die erfindungsgemäßen Fasern ein völlig anderes Verhalten zeigen als die herkömmliche Faser (Fig. 5). Man stellt hierbei über den Zugweg gesehen am Anfang erwartungsgemäß einen steilen Anstieg der Zugkraft fest, wobei allerdings im weiteren Verlauf erstaunlicherweise eine ganz deutliche Tendenz zu einem weiteren Anstieg der Zugkraft bei großen Zugwegen zu registrieren ist. Diese Versuchsergebnisse verdeutlichen, daß es mit der erfindungsgemäßen Faser gelingt, das naturgemäß äußerst spröde Verhalten des Betons hin zu einem quasi duktilen Verhalten zu verändern. Bei dem Vergleich der Versuchsergebnisse aus den Fig en 6 bis 8 mit den Ergebnissen des Vergleichsversuchs in Fig. 5 ist zu beachten, daß die wiedergegebenen absoluten Werte der Zugkraft insofern relativiert werden müssen, als der Faserquerschnitt bei der Faser aus Fig. 5 mit einem Wert von 0,636 mm² erheblich höher liegt als der Faserquerschnitt der erfindungsgemäßen Fasern mit 0,48 mm². Insofern muß das positive Ergebnis der Versuchswerte aus den Fig.en 6 bis 8 noch höher bewertet werden. In der Tabelle sind daher neben den Werten für die Zugkraft auch die rechnerischen Zugspannungen in den Stahlfasern angegeben. Es wurden neben den in den Versuchen ermittelten Maximalwerten auch die jeweiligen Durchschnittswerte angegeben. Man erkennt, daß die Maximalwerte der Zugspannungen bei allen Fasern erheblich unter der Zugfestigkeit des eingesetzten Fasermaterials von 1100 N/mm² bei der bekannten Faser und von 950 N/mm² bei der erfindungsgemäßen Faser liegen, daß aber bei der erfindungsgemäßen Faserform, insbesondere bei Querschnittsvergrößerungen um 25% oder 30%, die Festigkeit des Fasermaterials wesentlich besser genutzt wird.

**Tabelle**

| Meßwerte | | Vergleichsfaser | erfindungsgemäße Faser mit Querschnittsvergrößerung | | |
|---|---|---|---|---|---|
| | | | 20% | 25% | 30% |
| Maximalwerte | Zugkraft (N) | 236 | 196 | 271 | 362 |
| | Zugspannung (N/mm²) | 371 | 409 | 565 | 754 |
| Durchschnittswerte | Zugkraft (N) | 211 | 174 | 240 | 288 |
| | Zugspannung (N/mm²) | 332 | 362 | 501 | 600 |

## Patentansprüche

1. Faser, insbesondere Stahlfaser, zur Verstärkung gießbarer aushärtender Werkstoffe, insbesondere Beton, mit einer Länge (L) und einer Dicke (D), gebildet aus einem blechförmigen Vormaterial der Dicke (D), die einen entlang der Fasermittellinie sich erstreckenden, geradlinig verlaufenden Mittelteil der Breite (B_{M}) aufweist und deren beide Endbereiche (E) zumindest in Teillängen quer zur Fasermittellinie eine größere Querschnittsfläche (F_{E} ) aufweisen als die Querschnittsfläche (F_{M}) im Mittelteil der Faser, wobei die Vergrößerung der Querschnittsfläche (F_{E} ) der Endbereiche (E) in Richtung der Faserenden nicht sprunghaft ausgebildet ist und die Länge der Endbereiche (E) jeweils mindestens 5 % der gesamten Faserlänge (L) beträgt,
**dadurch gekennzeichnet,**
**daß** die Endbereiche (E) zumindest in einer ersten Teillänge jeweils als Abwinklung in einem Winkel (γ) vom geraden Mittelteil der Faser mit zueinander parallelen Längskanten ausgeführt sind, daß die Abwinklungen mit der die Breite (B_{M}) aufweisenden Seite des Mittelteils in einer gemeinsamen Ebene liegen und daß die Abwinklungen einer Faser jeweils bezüglich der Mittellinie des geraden Mittelteils auf entgegengesetzte Seiten der Faser weisen.

2. Faser nach Anspruch 1,
**dadurch gekennzeichnet,**
**daß** die Länge der Endbereiche (E) jeweils mindestens 7 %, insbesondere mindestens 10 %, der gesamten Faserlänge (L) beträgt.

3. Faser nach Anspruch 1 oder 2,
**dadurch gekennzeichnet,**
**daß** die Länge der Endbereiche (E) jeweils höchstens 25 %, insbesondere höchstens 20 %, der gesamten Faserlänge (L) beträgt.

4. Faser nach einem der Ansprüche 1 bis 3,
**dadurch gekennzeichnet,**
**daß** die maximale Querschnittsfläche (F_{E} ) in den Endbereichen (E) jeweils im Bereich des 1,1- bis 2-Fachen der Querschnittsfläche (F_{M}) im Mittelteil beträgt.

5. Faser nach Anspruch 4,
**dadurch gekennzeichnet,**
**daß** die maximale Querschnittsfläche (F_{E} ) in den Endbereichen (E) jeweils mindestens das 1,2-Fache, insbesondere mindestens das 1,3-Fache, der Querschnittsfläche (F_{M} ) im Mittelteil beträgt.

6. Faser nach Anspruch 4,
**dadurch gekennzeichnet,**
**daß** die maximale Querschnittsfläche (F_{E} ) in den Endbereichen (E) jeweils höchstens das 1,7-Fache, insbesondere höchstens das 1,5-Fache, der Querschnittsfläche (F_{M} ) im Mittelteil beträgt.

7. Faser nach einem der Ansprüche 1 bis 6,
**dadurch gekennzeichnet,**
**daß** die Längskanten der Faser jeweils als zueinander kongruente Schnittkanten ausgebildet sind.

8. Faser nach einem der Ansprüche 1 bis 7,
**dadurch gekennzeichnet,**
**daß** die Endbereiche (E) punktsymmetrisch zueinander geformt sind.

9. Faser nach Anspruch 8,
**dadurch gekennzeichnet,**
**daß** die Abwinklungen zum Ende der Faser hin eine Teillänge aufweisen, die parallel zum geraden Mittelteil verläuft und die gleiche Breite (B_{M} ) aufweist wie der Mittelteil.

10. Faser nach einem der Ansprüche 1 bis 9,
**dadurch gekennzeichnet,**
**daß** der Übergang vom geraden Mittelteil in die Endbereiche (E) jeweils mit einem Rundungsradius (r) ausgeführt ist.

11. Faser nach Anspruch 10,
**dadurch gekennzeichnet,**
**daß** die Größe des Rundungsradius (r) im Bereich des 1- bis 4-Fachen, insbesondere im Bereich des 2- bis 3-Fachen der Faserbreite (B_{M}) im geraden Fasermittelteil liegt.

12. Faser nach einem der Ansprüche 1 bis 11,
**dadurch gekennzeichnet,**
**daß** der Winkel (γ) der Abwinklung bezogen auf die Mittellinie des Mittelteils im Bereich von 20 ° bis 60 ° liegt.

13. Verfahren zur Herstellung von Fasern zur Verstärkung gießbarer aushärtender Werkstoffe nach einem der Ansprüche 1 bis 12, durch Zerschneiden eines blechförmigen Vormaterials, das in einer schrittweisen Vorschubbewegung in den Schneidbereich eines Schneidwerkzeugs bewegt wird, wobei die Richtung der Vorschubbewegung in einem Winkel (α) von weniger als 90 ° zur Faserlängsachse gehalten wird und die Größe des Vorschubs (V) die Breite (B_{M}) der Faser nach der Beziehung B_{M} = V * sinα bestimmt,
**dadurch gekennzeichnet,**
**daß** ein Schneidwerkzeug verwendet wird, bei dem die Schneidkanten der Schneiden entsprechend der Faserform einen geraden Mittelteil und daran anschtießende abgewinkelte Enden aufweisen, wobei die abgewinkelten Enden jeweils in einem Winkel (β) zur Vorschubrichtung stehen, der größer ist als der Winkel (α).

14. Vorrichtung zur Durchführung des Verfahrens nach Anspruch 13, mit mindestens einer stationären Schneide und mindestens einer damit korrespondierenden, motorisch angetrieben bewegten Schneide sowie mit einer schrittweise arbeitenden Vorschubeinrichtung für die Zuführung eines blechförmigen Vormaterials in den Schneidbereich der Schneiden, wobei die Vorschubrichtung in einem Winkel (α) von weniger als 90 ° zur Längsachse der stationären Schneide steht, die einen parallel zur Längsachse verlaufenden geraden Mittelteil aufweist,
**dadurch gekennzeichnet,**
**daß** die Schneiden jeweils abgewinkelte Enden aufweisen, die in einem Winkel (β) zur Vorschubrichtung stehen, der größer ist als der Winkel (α).

15. Vorrichtung nach Anspruch 14,
**dadurch gekennzeichnet,**
**daß** die Enden in einer Teillänge eine zweite Abwinklung aufweisen und jeweils parallel zur Längsachse der Schneide auslaufen.

16. Vorrichtung nach einem der Ansprüche 14 oder 15,
**dadurch gekennzeichnet,**
**daß** der Winkel (α) im Bereich von 20 ° bis 60 ° und der Winkel (β) im Bereich von 30 ° bis 90 ° liegt.

17. Vorrichtung nach einem der Ansprüche 14 bis 16,
**dadurch gekennzeichnet,**
**daß** die Ecken der Abwinklungen mit Rundungsradien (r) versehen sind.

18. Vorrichtung nach einem der Ansprüche 14 bis 17,
**dadurch gekennzeichnet,**
**daß** jeweils eine Vielzahl von stationären und bewegten Schneiden nebeneinander angeordnet sind.

19. Vorrichtung nach einem der Ansprüche 14 bis 18,
**dadurch gekennzeichnet,**
**daß** die bewegten Schneiden auf einer rotierenden Messerwalze angeordnet sind.

## Claims

1. A fibre, in particular steel fibre, for reinforcing pourable hardening materials, in particular concrete, having a length (L) and a thickness (D), formed from a sheet-metal-like preliminary material of the thickness (D), which has a rectilinear middle part of width (B_{M}) extending along the centre line of the fibre and the two end regions (E) of which at least in partial lengths transversely to the centre line of the fibre have a larger cross-sectional surface area (F_{E}) than the cross-sectional surface area (F_{M}) in the middle part of the fibre, the enlargement of the cross-sectional surface area (F_{E}) of the end regions (E) in the direction of the fibre ends not being abrupt and the length of the end regions (E) in each case being at least 5% of the total fibre length (L),
**characterised in that**
the end regions (E), at least in a first partial length, are each formed as angled sections at an angle (γ) from the straight middle part of the fibre with long edges parallel to one another, that the angled sections lie in a common plane with the side of the middle part bearing the width (B_{M}) and that the angled sections of a fibre in each case relative to the centre line of the straight middle part point to opposite sides of the fibre.

2. A fibre according to Claim 1, **characterised in that** the length of the end regions (E) in each case is at least 7%, in particular at least 10%, of the total fibre length (L).

3. A fibre according to Claim 1 or 2, **characterised in that** the length of the end regions (E) in each case is at most 25%, in particular at most 20%, of the total fibre length (L).

4. A fibre according to one of Claims 1 to 3, **characterised in that** the maximum cross-sectional surface area (F_{E}) in the end regions (E) in each case is in the range of 1.1 to 2 times the cross-sectional surface area (F_{M}) in the middle part.

5. A fibre according to Claim 4, **characterised in that** the maximum cross-sectional surface area (F_{E}) in the end regions (E) in each case is at least 1.2 times, in particular at least 1.3 times, the cross-sectional surface area (F_{M}) in the middle part.

6. A fibre according to Claim 4, **characterised in that** the maximum cross-sectional surface area (F_{E}) in the end regions (E) in each case is at most 1.7 times, in particular at most 1.5 times, the cross-sectional surface area (F_{M}) in the middle part.

7. A fibre according to one of Claims 1 to 6, **characterised in that** the long edges of the fibre are formed in each case as cut edges which are congruent to each other.

8. A fibre according to one of Claims 1 to 7, **characterised in that** the end regions (E) are formed point-symmetrically to one another.

9. A fibre according to Claim 8, **characterised in that** the angled sections towards the end of the fibre have a partial length which extends parallel to the straight middle part and has the same width (B_{M}) as the middle part.

10. A fibre according to one of Claims 1 to 9, **characterised in that** the transition from the straight middle part into the end regions (E) is designed each time with a rounding radius (r).

11. A fibre according to Claim 10, **characterised in that** the size of the rounding radius (r) is in the range of 1 to 4 times, in particular in the region of 2 to 3 times, the fibre width (B_{M}) in the straight middle part of the fibre.

12. A fibre according to one of Claims 1 to 11, **characterised in that** the angle (γ) of the angled section is in the range from 20° to 60° relative to the centre line of the middle part.

13. A method for the production of fibres for reinforcing pourable hardening materials according to one of Claims 1 to 12, by cutting up a sheet-metal-like preliminary material which is moved in a stepwise advance movement into the cutting region of a cutting tool, the direction of the advance movement being kept at an angle (α) of less than 90° to the longitudinal axis of the fibre and the amount of advance (V) determining the width (B_{M}) of the fibre in accordance with the equation B_{M} = V* sin α,
**characterised in that**
a cutting tool is used in which the cutting edges of the blades, corresponding to the shape of the fibre, have a straight middle part and angled ends adjoining it, the angled ends each being at an angle (β) to the direction of advance which is greater than the angle (α).

14. An apparatus for performing the method according to Claim 13,
comprising at least one stationary blade and at least one corresponding, motor-driven moving blade, and also a stepwise advance means for supplying a sheet-metal-like preliminary material to the cutting region of the blades, the direction of advance being at an angle (α) of less than 90° to the longitudinal axis of the stationary blade, which has a straight middle part extending parallel to the longitudinal axis,
**characterised in that**
the blades each have angled ends which are at an angle (β) to the direction of advance which is greater than the angle (α).

15. An apparatus according to Claim 14, **characterised in that** the ends in a partial length have a second angled section and each run out parallel to the longitudinal axis of the blade.

16. An apparatus according to one of Claims 14 or 15, **characterised in that** the angle (α) is in the range from 20° to 60° and the angle (β) in the range from 30° to 90°.

17. An apparatus according to one of Claims 14 to 16, **characterised in that** the corners of the angled sections are provided with rounding radii (r).

18. An apparatus according to one of Claims 14 to 17, **characterised in that** in each case a plurality of stationary and mobile blades are arranged next to one another.

19. An apparatus according to one of Claims 14 to 18, **characterised in that** the mobile blades are arranged on a rotating cutter block.

## Revendications

1. Fibre, en particulier fibre d'acier, pour le renfort de matières coulables et durcissables, en particulier du béton, présentant une longueur (L) et une épaisseur (D) et formée à partir d'un matériau brut en forme de tôle d'épaisseur (D), ladite fibre présentant une partie intermédiaire rectiligne de largeur (B_{M}) qui s'étend le long de la ligne médiane de la fibre et deux parties d'extrémité (E) qui présentent au moins sur des portions de longueur transversales à ladite ligne médiane une surface de section (F_{E}) plus grande que la surface de section (F_{M}) dans la partie intermédiaire de la fibre, l'augmentation de la surface de section (F_{E}) des parties d'extrémité (E) en direction des extrémités de la fibre n'étant pas discontinue et la longueur de chacune des parties d'extrémité (E) s'élevant à au moins 5% de la longueur totale (L) de la fibre,
**caractérisée en ce que** chacune des parties d'extrémité (E), au moins dans une première portion longitudinale, est coudée d'un angle (γ) par rapport à la partie intermédiaire de la fibre et comporte des arêtes longitudinales parallèles, **en ce que** lesdites parties d'extrémité coudées se trouvent dans le même plan que le côté de la partie intermédiaire présentant la largeur (B_{M}) et **en ce que** lesdites parties d'extrémité coudées d'une fibre sont respectivement inclinées de part et d'autre de la ligne médiane de la partie intermédiaire rectiligne.

2. Fibre selon la revendication 1,
**caractérisée en ce que** la longueur de chacune des parties d'extrémité (E) est égale à au moins 7%, en particulier au moins 10%, de la longueur totale (L) de la fibre.

3. Fibre selon la revendication 1 ou 2,
**caractérisée en ce que** la longueur de chacune des parties d'extrémité (E) est égale à au plus 25%, en particulier au plus 20%, de la longueur totale (L) de la fibre.

4. Fibre selon une des revendications 1 à 3,
**caractérisée en ce que** la surface maximale (F_{E}) de la section dans chacune des parties d'extrémité (E) est comprise entre 1,1 et 2 fois la surface de la section (F_{M}) dans la partie intermédiaire.

5. Fibre selon la.revendication 4,
**caractérisée en ce que** la surface maximale (F_{E}) de la section dans chacune des parties d'extrémité (E) est égale à au moins 1,2 fois, en particulier 1,3 fois, la surface de la section (F_{M}) dans la partie intermédiaire.

6. Fibre selon la revendication 4,
**caractérisée en ce que** la surface maximale (F_{E}) de la section dans chacune des parties d'extrémité (E) est égale à au plus 1,7 fois, en particulier au plus 1,5 fois, la surface de la section (F_{M}) dans la partie intermédiaire.

7. Fibre selon une des revendications 1 à 6,
**caractérisée en ce que** les arêtes longitudinales de la fibre sont à chaque fois conformées en arêtes de découpe convergeant l'une vers l'autre.

8. Fibre selon une des revendications 1 à 7,
**caractérisée en ce que** les parties d'extrémité (E) sont ponctuellement symétriques l'une de l'autre.

9. Fibre selon la revendication 8,
**caractérisée en ce que** les parties d'extrémité coudées présentent une portion longitudinale vers l'extrémité de la fibre, qui s'étend parallèlement à la partie intermédiaire rectiligne et qui présente la même largeur (B_{M}) que la partie intermédiaire.

10. Fibre selon une des revendications 1 à 9,
**caractérisée en ce que** la transition entre la partie intermédiaire et chaque partie d'extrémité (E) présente un rayon de courbure (r).

11. Fibre selon la revendication 10,
**caractérisée en ce que** la valeur du rayon de courbure (r) est compris entre 1 et 4 fois, en particulier 2 à 3 fois, la largeur de fibre (B_{M}) dans la partie intermédiaire rectiligne.

12. Fibre selon une des revendications 1 à 11,
**caractérisée en ce que** l'angle (γ) de la partie d'extrémité coudée par rapport à la ligne médiane de la partie intermédiaire est compris entre 20° et 60°.

13. Procédé pour la fabrication de fibres destinées à renforcer des matières coulables et durcissables selon une des revendications 1 à 12, par découpe d'un matériau brut en forme de tôle, qui est avancé pas-à-pas dans le domaine d'action d'un outil de découpe, l'angle (α) de la direction de l'avance par rapport à l'axe longitudinal de la fibre étant inférieur à 90° et la valeur de l'avance (V) étant égale à B_{M}=V*sinα, B_{M} étant la largeur de la fibre,
**caractérisé en ce qu'**on utilise un outil de découpe, dans lequel les arêtes de coupe des couteaux présentent, en correspondance avec la forme des fibres, une partie intermédiaire rectiligne prolongée par des extrémités coudées, ces dernières formant à chaque fois, avec la direction d'avance, un angle (β) supérieur à l'angle (α).

14. Dispositif pour la mise en oeuvre du procédé selon la revendication 13, avec au moins un couteau stationnaire et au moins un couteau mobile correspondant, entraîné par moteur, ainsi qu'avec un dispositif d'avance pas-à-pas pour l'amenée d'un matériau brut en forme de tôle dans le domaine d'action des couteaux, la direction d'avance faisant un angle (α) inférieur à 90° par rapport à l'axe longitudinal du couteau stationnaire, qui présente une partie intermédiaire rectiligne parallèle à l'axe longitudinal,
**caractérisé en ce que** les couteaux présentent chacun des extrémités coudées, qui font, par rapport à la direction d'avance, un angle (β) plus grand que l'angle (α).

15. Dispositif selon la revendication 14,
**caractérisé en ce que** les extrémités comportent une partie longitudinale formant une deuxième partie coudée et, à chaque fois, s'étendent parallèlement à l'axe longitudinal du couteau.

16. Dispositif selon une des revendications 14 ou 15,
**caractérisé en ce que** l'angle (α) est compris entre 20° et 60° et l'angle (β) est compris entre 30° et 90°.

17. Dispositif selon une des revendications 14 à 16,
**caractérisé en ce que** les angles des parties coudées comportent des rayons de courbure (r).

18. Dispositif selon une des revendications 14 à 17,
**caractérisé en ce que**, à chaque fois, une pluralité de couteaux stationnaires et de couteaux mobiles sont agencés les uns à côté des autres.

19. Dispositif selon une des revendications 14 à 18,
**caractérisé en ce que** les couteaux mobiles sont agencés sur un tambour de coupe rotatif.
